# EUROPEAN PATENT SPECIFICATION

(11) **EP 1 492 717 B1**
(45) Date of publication and mention of the grant of the patent: **04.01.2006**
(21) Application number: 03713077.0
(22) Date of filing: 06.03.2003
(51) Int. Cl.: B65G 63/00

(54) **TRANSFER STATION AND METHOD FOR LOADING AND/OR UNLOADING CONTAINERS FROM A SHIP**
UMLADESTATION UND VERFAHREN ZUM BE- UND/ODER ENTLADEN VON CONTAINERN VON SCHIFFEN
STATION ET PROCEDE DE TRANSFERT POUR LE CHARGEMENT ET/OU LE DECHARGEMENT DE CONTENEURS SUR UN BATEAU

(30) Priority: 07.03.2002 NL 1020124
(43) Date of publication of application: 05.01.2005
(73) Proprietor: Technische Universiteit Delft, 2628 BL Delft (NL)
(72) Inventor: EVERS, Joseph, Johannes, Maria, NL-2343 JH Oestgeest (NL)
(74) Representative: Winckels, Johannes Hubertus F.
(86) International application number: PCT/NL2003/000169
(87) International publication number: WO 2003/074397

(56) References cited:
- GB-A- 2 065 076
- US-A- 5 951 226

## Description

The invention relates to a transfer station for loading containers on and/or unloading containers from a ship. The invention also relates to a method for loading containers on and/or unloading containers from a ship on such a transfer station.

Conventional container terminals contain one or more storage locations for containers (further to be referred to as "stacks"). When loading or unloading the ship, the containers are transported per vehicle between a stack and a quay crane. The quay crane provides for the transfer of the containers between the quay and the ship.

To have the container terminal function in an economically as optimal way as possible, it is essential for the crane to have a degree of capacity utilization which is as high as possible. A waiting crane leads to loss. For that reason, preferably, the stack is located close to the quay crane, so that, on demand, in a short period of time, the containers can be transported by the vehicle between the stack and the quay crane. On large loading and unloading quays for intercontinental container ships this is typically the case.

In general, the quays for transfer from smaller ships such as inland vessels and coasters are located further from the stacks. As a result, fluctuations in the supply and discharge of containers occur, for instance through variations in the time required for the transport between the stack and the quay crane. Therefore, it becomes more difficult to realize a high degree of capacity utilization of the quay crane.

It is known to solve this problem by using vehicles provided with a hoisting apparatus which, itself, is capable of loading and unloading containers instead of the quay crane transferring the containers directly from the vehicle onto the vessel or vice versa. With such vehicles, called straddle carriers, it is possible to temporarily put the container on the quay within the reach of the quay crane when the quay crane is not available. However, such vehicles are expensive, broad and difficult to maneuver.

UK Patent Application GB 2 065 076 A discloses a transfer station conform to the preamble of claim 1.

It is one object of the invention to provide a transfer station and a method for loading and/or unloading containers with which fluctuations in the duration of the transport between the stack and the quay crane can be compensated for without vehicles being required which are provided with a hoisting apparatus.

The invention provides a transfer station for loading containers on and/or unloading containers from a ship, which transfer station is provided with
- a quay with a quay surface adjacent thereto;
- at least one quay crane for transporting containers from and/or to a ship lying by the quay, the quay crane having a hoisting range comprising a first positioning strip for a vehicle on the quay surface;

characterized in that the station is provided with
- a stacking crane, moveable parallel to the quay, arranged for transporting containers between a second positioning strip for a vehicle on the quay surface and an auxiliary stack on the quay surface, which auxiliary stack lies within the hoisting range of the at least one quay crane;
- an instruction generating system arranged for taking a decision to direct an arriving vehicle to the first or the second positioning strip, at least depending on other vehicles being present or not being present on the first positioning strip, and, when the second positioning strip is selected, for giving an instruction for the transfer of the container with the stacking crane between the arriving vehicle and the auxiliary stack.

In the proposed transfer station with associated instruction generating system, transport between the auxiliary stack and the quay cranes can be dispensed with. No vehicles are required for transporting the containers between the auxiliary stack and the quay crane and the vehicles need not contain hoisting apparatus because, if necessary, the stacking crane at the quay ensures the transport between the arriving vehicle and the auxiliary stack.

On the transfer station described, the stacking crane yields the hoisting capacity required for the "uncoupling" of, on the one side, the supply and discharge of containers and, on the other side, the transfer by the quay crane.

Preferably, the decision to direct the arriving vehicle towards the first or the second positioning strip is taken such that the arriving vehicle can be expected to be unloaded or loaded as soon as possible when it is unloaded or loaded by the stacking crane of the quay crane after vehicles possibly already present.

In one embodiment, the instruction generation system preferably selects the first positioning strip when on the first positioning strip less than a predetermined number of vehicles are present. The predetermined number is preferably such that a container can be unloaded faster from the ship to the arriving vehicle directly with the quay crane when it is the vehicle's turn after the vehicles already present on the first positioning strip, than when the container is transferred via the auxiliary stack.

In a different embodiment, the instruction generating system selects the first positioning strip when on the second positioning strip more than a predetermined number of vehicles are present.

In a further embodiment, the instruction generating system determines a loading degree of the ship and chooses, depending on a weight of a container on the arriving vehicle, when the container cannot directly be loaded at the decision, to direct the arriving vehicle to the second positioning strip.

In one embodiment, the transfer station is provided with a bridge and driving undercarriages supporting the bridge, the bridge projecting outside the driving undercarriages above the auxiliary stack and associated stacking crane, and the stacking crane being drivable parallel to the quay over rails underneath the bridge. Accordingly, in a simple manner, an auxiliary stack is provided which is accessible both to the quay crane and the stacking crane.

In a different embodiment, the transfer station is provided with a further quay crane with a further hoisting range comprising the first vehicle positioning strip and the auxiliary stack. Then, in case of a decision to direct the arriving vehicle to the first positioning strip, the instruction generating system takes a further decision, depending on other vehicles being present or not being present on parts of the first positioning strip, to direct the vehicle to the part of the first positioning strip in front of the quay crane or in front of the further quay crane.

The invention provides also a method for loading and/or unloading containers on a ship in claim 9.

These and other objectives and advantages of preferred embodiments the transfer station and the method of the invention will be further described with reference to the following Figure.
Fig. 1 shows a loading and/or unloading station.
Fig. 2 shows a top plan view of a loading and/or unloading station.
Fig. 3 shows an organization of an instruction generating system.
Fig. 4 shows a flow-chart for controlling the system.

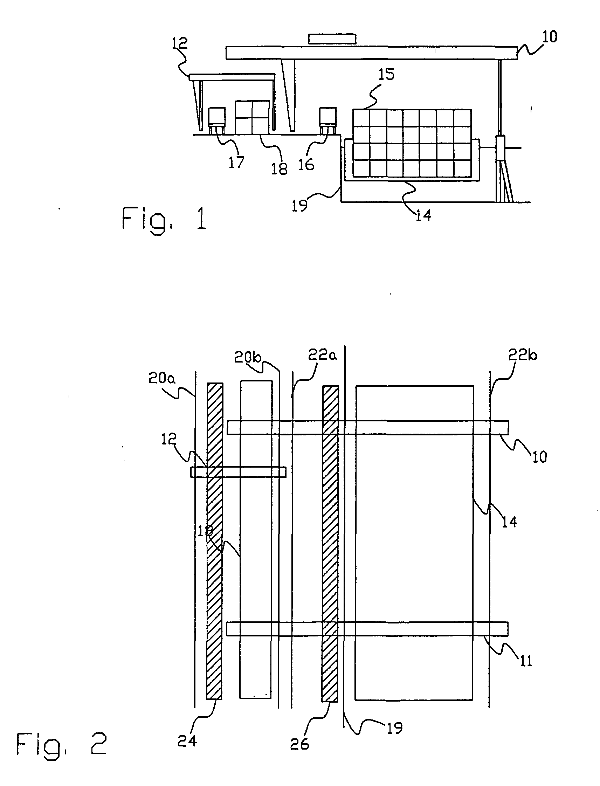

Fig. 1 shows a transfer station along quay 19, provided with a quay crane 10 and a stacking crane 12, which, by way of example, are both designed as gantry cranes. Both the quay crane 10 and the stacking crane 12 can be driven over rails in a direction perpendicular to the plane of the drawing. Stacking crane 12 is located, in part, below the quay crane 10, so that stacking crane 12 can place containers onto a quay surface or can lift them therefrom, whence or whereon also quay crane 10 can place or lift containers. Naturally, quay crane 10 can only do so after stacking crane 12 has been moved from this location. The transfer station can also be provided with two (or more) quay cranes, utilizing the same rails.

Fig. 1 also schematically shows a ship 14, loaded with containers 15, vehicles 16, 17 with containers and an auxiliary stack 18.

Fig. 2 shows the same transfer station as Fig. 1 in top plan view. Moreover, in Fig. 2, a second quay crane 11 is shown with a hoisting range extending as far as the ship 14 and the part of the quay surface for the auxiliary stack 18. As a result, several quay cranes 10, 11 can have access to the auxiliary stack 18 which is operated by the same stacking crane 12. Moreover represented are the rails 20a,b over which the stacking crane 12 is moveable, and the rails 22a, b over which the quay crane is moveable.

The vehicles 16, 17 are moveable along the auxiliary stack 18 as well as below the quay crane or quay cranes 10, 11, to positioning strips 24 (hatched) adjacent the auxiliary stack 18 and positioning strips 26 (hatched) below quay cranes 10, 11. Preferably, this is done over special rails (not shown) for the vehicles on the positioning strips 24, 26 and to and from the positioning strips, but transport of vehicles which are not bound to rails is also possible. Preferably, for the transport with the vehicles, use is made of one-way traffic, to which end separate supply and discharge roads to the positioning strips 24, 26 are built, so that departing vehicles travel a different road than arriving vehicles.

In the case of several quay cranes, preferably, use is made of a positioning strip 26 and a transport strip running parallel to each other and to the quay between the driving undercarriages of the quay cranes 10, 11. To that end, in the case of vehicles bound to rails, between the driving undercarriages of the quay cranes, two pairs of parallel running pairs of rails, i.e. positioning rails on the positioning strip 26 and supply rails, are provided having, each time, switches between the positioning rails and the supply rails to and from the positioning strip 26.

Stacking crane 12 is designed such that it can move independently of the quay cranes 10, 11 in the direction parallel to the quay 19. This means that stacking crane 12 can pass the quay cranes in this direction. The combination of independent moveability of quay crane 10, 11 and stacking crane 12 and a shared hoisting range of quay crane and stacking crane has been realized by way of example in that stacking crane 12 is lower than the underside of the bridge of the quay crane 10, 11 which is designed as a gantry crane. Preferably, the quay crane has or the quay cranes each have a bridge reaching, on the quay, beyond the driving undercarriages of the respective quay crane 10, 11 and the stacking crane 12 is located outside the space between the undercarriages of the quay crane. Thus, the vehicle 17 can be disposed at the stacking crane on a part of the quay surface which does not fall in the hoisting range of the quay crane. As an alternative, the stacking crane 12 could fit entirely under the gantry of the quay crane 10, 11 (between the driving undercarriages), but then, space is required, unnecessarily, below the quay crane 10, 11 for the vehicle the stacking crane is loading or unloading. Also, the driving undercarriages of the quay crane 10 can both be supported on the quay instead of, as shown, one driving undercarriage being supported beyond the ship 14.

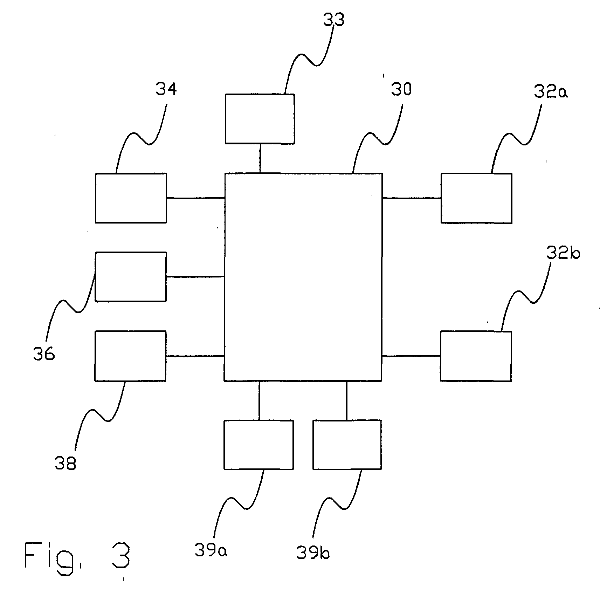

Fig. 3 shows a structure of an instruction generating system for such a transfer station. The system contains a computer 30, interfaces 32a,b to quay cranes, an interface 34 to a stacking crane, an interface 36 to the vehicles, an interface 38 to a storage location or storage locations for containers (such as, for instance, other terminals), an interface 33 to a database with container information and memories 39a,b for storing information about the occupation of the stack and available vehicles. The interfaces 32a,b, 34, 36, 38 to the quay cranes 10, 11, the stacking crane 12, the vehicles and the storage location can each be an automatic control for operating the quay cranes 10, 11, the stacking crane 12, the vehicles or the storage location, or information channels such as screens, which pass on instructions generated by the instruction generating system to human operators of the quay cranes 10, 11, the stacking crane 12, the vehicles or the storage location. Although computer 30 is shown as a single computer, it will be clear that instead of a single computer, also a complex of mutually communicating computers can be utilized, each performing a part of the tasks of the instruction generating system more or less autonomously. Such computers can be associated with and/or be physically present on the cranes, on the vehicles, in a management system of the quay and/or a management system for the auxiliary stack.

Table 1 gives an illustrative overview of possible functional characteristics the transfer station preferably meets.

**Table 1: Illustrative functional characteristics of operations by the quay**

| | |
|---|---|
| In relation to the ship | 1: width ship's passage: 25 m, loaded four containers high; |
| | 2: displacement speed along the quay: > 1½ m/sec; |
| | 3: average cycle-time: < 1½ min. |
| Transport | 1: average passage time vehicle: < 6 min; |
| | 2: 85% reliability passage time : < 8 min; |
| | 3: stacking "below the crane" parallel to the quay: e.g. 2 wide, |
| | 2 up; |
| | 4: driving speed stacking crane: > 2.5 m/sec (unloaded > 3.0 |
| | m/sec) |
| Control | 1: balanced loading/unloading of the ship and dynamic drawing up of loading/unloading plan; |
| | 2: coordination of quay cranes working in tandem; |
| | 3: coordination of stacking- and quay cranes, for treatment of the same ship; |
| | 4: instructing vehicles with respect to positioning below quay/stacking crane; |
| | 5: optional control transition handling of the separate stacking cranes; |
| | 6: optional control transition handling of separate quay cranes; |
| | 7: calling vehicles for supplementing the "work stock"". |

To prevent skewness of the ship (or flat bottom craft) and excessive forces in the ship's construction, *balancing* treatment of the ship is to be preferred. To be able to pick up or put down the containers thus distributed over the hold, the quay cranes regularly move along the quay. With respect to the desired productivity, for that reason, a driving speed of at least 1% m/sec is desirable. Generally, a gantry crane is then proposed because it can be of relatively light design. With respect to the available space, for instance, a dock can be considered.

An important performance indicator is the productivity of the quay crane; a waiting crane is a waiting ship. Therefore, the control system must ensure a timely supply and discharge. This can be done by summoning the containers or the vehicles well in advance to thus maintain a sufficiently large work stock for the quay cranes. Naturally, this leads to extra waiting times for the vehicles. A different possibility is to arrange an auxiliary stack close to the quay cranes and have it function as a part of the current work stock. Therefore, a typical function of this auxiliary stack is the uncoupling of the supply/discharge and the transfer. In addition, an auxiliary stack can contribute to arranging combined rides (full both ways) and peak-to-valley compensation.

In operation, the loading and/or unloading with the transfer station is carried out on the basis of instructions given by an instruction generating system. The working thereof will first be described with reference to the loading of the ship 14. When loading, the instruction generating system summons containers from the respective locations of the surrounding terminal and/or terminals.

Upon arrival of a vehicle 17, the instruction generating system decides to which positioning strip the vehicle is to go and instructs the arriving vehicle accordingly. The instruction generating system takes the decision on the basis of the loading condition of the ship and/or the properties of the container to be loaded and/or the occupancy of the positioning strips for the cranes by other vehicles 16 (only one shown). When there is sufficient space on the positioning strip 26 below the quay crane, the instruction generating system generally instructs the vehicle to position itself on the positioning strip 26 below the quay crane 10, 11. The arriving vehicle 17 moves to the indicated position.

When a quay crane is to load a subsequent container and there is no vehicle with a container below the quay crane 10, 11, the instruction generating system instructs the quay crane 11 to take a container from the auxiliary stack 18. When there is a vehicle with a container below the respective quay crane 10, 11, then the instruction generating system generally instructs the quay crane to load a container from a vehicle on the positioning strip 29 below the quay crane onto the ship 14.

The instruction generating system dispatches an instruction to summon a new container when the current work stock threatens to drop below a particular level (this is also indicated as the ordering level). The current work stock consists of the summoned containers still in transit plus those waiting on the vehicles on the quay crane 10 or stacking crane 12, plus those waiting in the auxiliary stack 18.

The (computer-instructed) stacking crane 12 can be driven parallel to the quay and stacks the containers thus that they are also accessible to the quay crane 10 (or quay cranes). In this set-up, the quay crane 10 does not need to perform extra stacking operations. The auxiliary stack 18, for that matter, can extend over a width which cannot be entirely reached by the quay crane 10, while, width-wise, only one or two containers are accessible to the quay crane 10. In this case, the stacking crane 12 provides the transverse transport to positions on the auxiliary stack 18 which are accessible to the quay crane 10.

Unloading proceeds in reversed order:
(i) When, upon arrival of an arriving vehicle, too many empty vehicles 16 are present below the quay crane, the instruction generating system directs the newly arriving vehicle 17 to the auxiliary stack 18;
(ii) In the other case, the instruction generating system directs the vehicle 17 to a set-up position below the quay crane 10;
(iii) When no empty vehicle is available on the positioning strip 26 below the quay crane 10, 11 for depositing a container, the quay crane 10 places this container on the auxiliary stack 18;
(iv) The instruction generating system summons a new empty vehicle 17 when the number of vehicles threatens to drop below a particular level. Preferably, this happens under control of the quay crane 10, 11. When unloading, the current work stock consists of the number of empty vehicles in transit and waiting, minus the number of containers waiting in the auxiliary stack 18 to be picked up.

Preferably, the instruction generating system performs different tasks on-line (i.e. while the ship is being loaded or unloaded). One typical task is to provide computer supported "transition handling". No fixed unloading or loading plan is required. In case work is carried out without a fixed unloading or loading plan, each time, it must be determined *ad hoc* which container is to be loaded, or on which location in the hold a container to be loaded must be placed. Preferably, this is done by using a sensor (not shown) measuring a ship's position and/or with the aid of an updated database concerning the loading of the ship. In this case, the instruction generating system contains a computer program carrying out an algorithm which processes the measurements of the ship's position and the weight data of the containers, and each time chooses a position of a new container to be placed which is selected such that the position of the ship 14 deviates no more than a predetermined amount from the horizontal position. The instruction generating system passes the selected position as an instruction to the quay crane 10.

When the length of the holds covers four or more 40-feet containers, it is possible to work with two quay cranes simultaneously. In this case, the instruction generating system coordinates the operations of both cranes, for instance by selecting with which quay crane an arriving vehicle 17 is to be loaded or unloaded. In conjunction therewith the system gives instructions to the vehicles about the places to take up: below a selected quay crane or at the auxiliary stack, such that the cranes can work efficiently.

When working with an automated operating system, also the handling of the stacking cranes can proceed in an automated manner. For larger ships, such as large inland vessels, it is also possible to control the quay cranes in an automated manner. Naturally, the transfer can also be carried out while being manned (but still on the basis of instructions generated by the instruction generating system).

Finally, the instruction generating system has the task to summon containers or, as the case may be, vehicles on the basis of a minimum work stock to be maintained. Preferably, the initiative lies with the quay cranes as they have to furnish the eventual client service. With good timing and a well functioning transport system, probably, on average, no more than one out of three vehicles will have to make the detour along the auxiliary stack. In that case, one stacking crane is sufficient for supporting two quay cranes working in tandem. Naturally, however, also several stacking cranes can be used. A work stock of six containers for each quay crane in the auxiliary stack 18 seems sufficient.

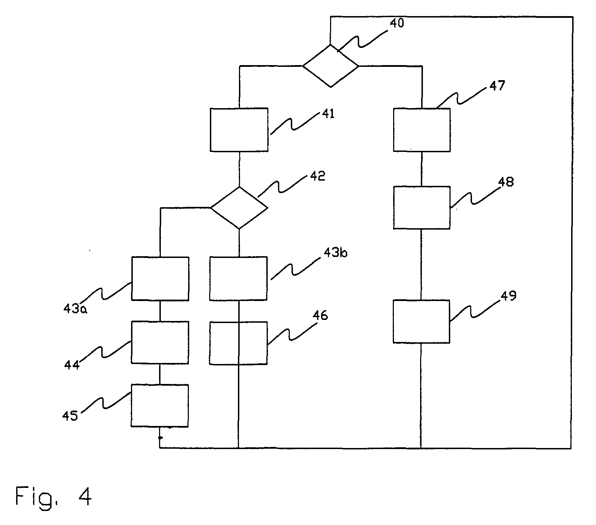

Fig. 4 shows a flow chart of the operation of the instruction generating instruction-generating system when loading or unloading. Execution of the flow chart begins with the detection of an "event", such as the arrival of a vehicle 17 or a request from a quay crane 10 for picking up or taking away a next container. In an initial step 40, the system determines which event is involved and, depending thereon, carries out a first or a second event handling.

Upon arrival of a vehicle 17 with container, the instruction for the arriving vehicle 17, when loading a ship can, for instance, be established with the following steps.

In a first step 41, the instruction generating system determines how many vehicles 16 are waiting at the quay crane 10, or, in case of several quay cranes 10, 11, at each of the one or more quay cranes 10, 11. Optionally, also the number of vehicles waiting at the stacking crane 12 is determined. In a second step 42, the instruction generating system chooses whether the vehicle is to be sent to the positioning strip 26 below the quay crane 10 (or cranes 10, 11) or to the positioning strip 24 at the auxiliary stack 18.

The instruction generating system determines this choice depending on the number of vehicles waiting at the quay crane or cranes 10, 11 and, optionally, at the stacking crane 12. When at all eligible quay cranes 10, 11 more than a predetermined number N (N is for instance selected such that the time required for unloading N vehicles with the quay crane 10, 11 is longer than the time required for unloading the vehicle with the stacking crane 12, for instance N = 2) of vehicles are waiting, the instruction generating system decides to send the arriving vehicle to the stacking crane. In one embodiment, the instruction generating system decides to send the arriving vehicle to the stacking crane 12 also when the container on the vehicle 17 has a weight which makes it desirable not to load the container onto the ship 14 yet.

Optionally, however, the instruction generating system chooses to send the vehicle to the positioning strip for the quay cranes 10, 11 when the number of vehicles waiting at the auxiliary stack is larger than a threshold number M (M is, for instance, so large that the time for unloading M containers with the stacking crane 12 is longer than the time required for unloading the containers present under the quay crane 10 or cranes 10, 11). More in general, the instruction generating system chooses the positioning strip 24 at the auxiliary stack 18 or the positioning strip 26 below the quay crane 10 so that the arriving vehicle can be expected to be unloaded as early as possible by the stacking crane 12 or the quay crane 10, respectively, when it is unloaded after vehicles optionally already present. Preferably, this is realized by rules which make the choice for a positioning strip depending on the different numbers of vehicles already present. Optionally, the instruction generating system can calculate the time required before the vehicle has been unloaded for all possible options, given the vehicles already present, and then select the option entailing the least time.

In a third step 43a,b, the instruction system sends an instruction corresponding to the decision taken to the arriving vehicle (or to a switch in the rails over which the vehicle drives to the positioning strip 24 at the auxiliary stack 18 or to the positioning strip 26 below the quay crane or cranes 10, 11).

In a fourth step 44, the instruction generating system also selects a position to be taken up on the positioning strip at the auxiliary stack 18. The instruction generating system makes this choice depending on the location where the container is to be placed in the auxiliary stack 18 (the instruction generating system strives for a uniform "filling" of the auxiliary stack 18, by selecting a relatively lesser occupied part of the auxiliary stack 18). The set-up position at the auxiliary stack 18 is chosen such that it is as close as possible to the selected location on the auxiliary stack. In a fifth step 45, the instruction generating system gives the arriving vehicle the instruction to drive to the selected position.

When the instruction generating system directs the arriving vehicle to the quay crane or cranes 10, 11, the instruction generating system, in the case where there are several quay cranes 10, 11, performs a sixth step 46 in which the instruction generation system chooses between the quay cranes 10, 11, depending on the availability of positioning locations and, optionally, depending on the distribution of load. When at an eligible quay crane fewer than N (mentioned above) vehicles are waiting, the instruction generating system selects an eligible quay crane with the smallest number of waiting vehicles, optionally unless, from a viewpoint of uniform loading, this quay crane 10, 11 is not eligible for the container involved. Thereupon, in the sixth step 46, the instruction system sends an instruction to the arriving vehicle to go to the positioning strip for the selected quay crane 10, 11, and, optionally, to join the vehicles waiting there.

Preferably, also the position to be occupied on the positioning strip at a quay crane is chosen by the instruction generating system, more specifically such that it is as close as possible to the location in the ship's hold where the container is to be placed. In this case, the instruction generating system also sends an instruction about this to the vehicle.

When the instruction generating system detects an event indicating that a quay crane 10, 11 wants to transfer a new container, a seventh step 47 is performed. In the seventh step 47, the instruction generating system chooses whether the quay crane 10, 11 has to take the container from the auxiliary stack 18 or from a vehicle on the positioning strip 26 below the quay crane 10, 11 concerned. Preferably, the instruction generating system selects a container on a vehicle on the positioning strip 26 below the quay crane 10, 11. When such a vehicle is not present, the instruction generation system chooses a container on the auxiliary stack 18. In addition, preferably, the instruction generating system takes the loading conditions into account, but also a smallest possible moving distance of a quay crane and also the positions a possible other crane will take up. When these conditions render it undesirable to take a container from a vehicle on the positioning strip 26 in front of the quay crane 10, 11, then the instruction generating system chooses a container from the auxiliary stack 18 after all.

In an eighth step 48, the instruction generating systems sends an instruction to the quay crane in correspondence with the decision taken in the seventh step 48. In a ninth step 49, the instruction generating system determines whether through the transfer of the container the ordering level is reached. If this is the case, the instruction generating system transmits an instruction to send a vehicle with a new container to the quay.

Although in the foregoing, for clarity's sake, the operation of the instruction generating system has been presented in terms of the successive performance of a number of steps for one vehicle, it will be clear that also intermediately, corresponding steps for other vehicles can be carried out. Also, the different steps can each be performed by separate subsystems of the instruction generating system (for instance by a system in the quay crane 10, 11, a system in the stacking crane 12, a system for a switch between the supply route to the quay crane 10, 11 and the auxiliary stack 18).

Also, the steps need not be performed one immediately after the other. For instance, preferably, a first choice between giving an instruction to drive to the quay crane 10 (or cranes 10, 11) or to the auxiliary stack 18 is taken separately from a second choice for a particular positioning place adjacent the auxiliary stack 18 or below the quay cranes 10, 11, and separately from a third choice for summoning a subsequent vehicle with a container. Preferably, the first and second choice are each time postponed until a latest moment before execution of the resulting instruction makes a difference. Accordingly, with a simplest way of programming an optimal effect can be achieved and, moreover, the system is more robust against execution failures.

When unloading, the instruction generating system generates the instructions in a comparable manner.
(i) When at each quay crane M (for instance M=2) or more vehicles are waiting, the instruction generating system instructs an arriving vehicle to go to a quay crane or to a stacking crane with the smallest number of waiting vehicles. Optionally, the system generates an additional instruction about the position to be taken up on the positioning strip and to join the vehicles possibly waiting there.
(ii) When at a quay crane less than M (mentioned above) vehicles are waiting, the instruction generating system gives the instruction to go to a quay crane with the smallest number of waiting vehicles. Optionally, the system generates an additional instruction about the position to be taken up on the positioning strip (see iv) and to join the vehicles possibly waiting there.
(iii) The position to be taken up on the positioning strip at a quay crane is selected such that it is (as close as possible) near the location in the ship's hold whence the container is to be unloaded;
(iv) The position to be taken up on the positioning strip at the stack is selected such that it is (as close a possible) near the location where the container is to be taken from the stack, a uniform "filling" of the stack is to be aimed for.

When a quay crane is to place a container on the stack or in the ship's hold, primarily, a smallest possible displacement distance of a quay crane is taken into account, and also the positions a possible other crane may be going to take up.

The configuration described contains two quay cranes 10, 11 parallel to the quay and working in tandem and one stacking crane 12, which stacks within the range of the quay cranes 10, 11. Quay cranes 10, 11 and stacking crane 12 work in coordination with the aid of the instruction generating system. In principle, the vehicles are loaded or unloaded by the quay cranes, while, to prevent or shorten waiting times of the vehicles and the quay cranes, the "detour" along the stack is made. No transport between the quay cranes 10, 11 and the auxiliary stack 18 is required while yet an ample work stock can be provided for.

## Claims

1. A transfer station for loading containers (15) on and/or unloading containers from a ship (14), which transfer station is provided with
- a quay (19) with a quay surface adjacent thereto;
- at least one quay crane (10,11) for transporting containers from and/or to a ship (14) lying along the quay (19), the at least one quay crane (10,11) having a hoisting range comprising a first positioning strip (26) for a vehicle (16) on the quay surface;
- a stacking crane (12) movable parallel to the quay (19) and arranged for transporting containers between a second positioning strip (24) for a vehicle (17) on the quay surface and an auxiliary stack (18) on the quay surface;
**characterized in that** the station is provided with an instruction generating system designed for taking a decision to direct an arriving vehicle (16,17) to the first or the second positioning strip (26,24), at least depending on other vehicles being present or not being present on the first positioning strip (26), and, when the second positioning strip (24) is selected, for giving an instruction for the transfer of the container with the stacking crane (12) between the arriving vehicle (17) and the auxiliary stack (18), whereby the auxiliary stack (18) lies within the hoisting range of the at least one quay crane (10,11).

2. A transfer station according to claim 1, wherein the at least one quay crane (10,11) is provided with a bridge and driving undercarriages which support the bridge, the bridge projecting outside the driving undercarriages above the auxiliary stack (18) and associated stacking crane (12), the stacking crane (12) being drivable over rails underneath the bridge parallel to the quay (19).

3. A transfer station according to claim 1 or 2, provided with a further quay crane (10,11) with a further hoisting range comprising the first vehicle positioning strip (26) and the auxiliary stack (18), wherein the instruction generating system is arranged, in case of a decision to direct the arriving vehicle (16,17) to the first positioning strip (26), to take a further decision, depending on other vehicles being present or not being present on parts of the first positioning strip (26) in front of the quay crane and the further quay crane, respectively, to direct the vehicle (16,17) to the part of the first positioning strip (26) in front of the quay crane or in front of the further quay crane.

4. A transfer station according to any one of the preceding claims, wherein the instruction generating system is arranged, when deciding to direct the arriving vehicle (16,17) to the first or the second positioning strip (26,24), to give preference to the first positioning strip (26) when on the first positioning strip (26) less than a predetermined number of vehicles are present.

5. A transfer station according to claim 4, wherein the instruction generating system is arranged, when deciding to direct the arriving vehicle (16,17) to the first or the second positioning strip (26,24), to give preference to the first positioning strip (26) when on the second positioning strip (24) more than a predetermined number of vehicles are present.

6. A transfer station according to any one of the preceding claims, wherein the instruction generating system is arranged, when deciding to direct the arriving vehicle (16,17) to the first or the second positioning strip (26,24), to choose that one of the first and second positioning strips (26,24) where the arriving vehicle (16, 17) can be expected to be unloaded or loaded as early as possible, when it is unloaded or loaded by the stacking crane (12) or the at least one quay crane (10,11) after vehicles possibly already present.

7. A transfer station according to any one of the preceding claims, wherein the instruction generating system is arranged to measure a loading degree of the ship (14) and, depending on the weight of a container on the arriving vehicle (16,17), if the container is not directly loadable, when deciding, to choose to direct the arriving vehicle (16,17) to the second positioning strip (24).

8. A transfer station according to any one of the preceding claims, wherein the instruction generating system is arranged to take decisions about instructions to the arriving vehicle (16,17) in a distributed manner, with at least one of the decisions being taken independently of subsequent decisions on the arriving vehicle (16,17), and the subsequent decisions are taken depending on an execution of the at least one decision.

9. A method for loading and/or unloading containers (15) on a ship (14), which method comprises the steps of
- transporting containers with at least one quay crane (10,11) from and/or to a ship (14) along the quay (19), while the at least one quay crane (10,11) has a hoisting range comprising a first positioning strip (26) for a vehicle (16) on a quay surface;
- deciding, computer-instructed, to send an arriving vehicle (16,17); at least depending on whether a number of other vehicles are present or not on the first positioning strip (26), to the first or to a second positioning strip (26,24) on the quay surface;
- in case the arriving vehicle (16,17) is sent to the second positioning strip (24), ordering a stacking crane (12), moveable parallel to the quay (19), to transfer a container between the arriving vehicle (16,17) and an auxiliary stack (18), which auxiliary stack (18) is wholly or partly within the hoisting range of the at least one quay crane (10,11) on the quay surface.

## Patentansprüche

1. Umladestation zum Be- und/oder Entladen von Containern (15) von einem Schiff (14), wobei die Umladestation aufweist:
- einen Kai (19) mit einer angrenzenden Kaifläche;
- wenigstens einen Kaikran (10, 11) zum Transportieren von Containern von und/oder zu einem Schiff (14), das an dem Kai (19) anliegt, wobei der wenigstens eine Kaikran (10, 11) einen Hebebereich mit einem ersten Positionierungsstreifen (26) für ein Fahrzeug (16) auf der Kaifläche aufweist;
- einen Stapelkran (12), der parallel zu dem Kai (19) bewegt werden kann und zum Transportieren von Containern zwischen einem zweiten Positionierungsstreifen (24) für ein Fahrzeug (17) auf der Kaifläche und einem Hilfsstapel (18) auf der Kaifläche ausgelegt ist;
**dadurch gekennzeichnet, dass** die Station aufweist:
ein Befehlserzeugungssystem, das so ausgestaltet ist, dass es eine Entscheidung trifft, um ein ankommendes Fahrzeug (16, 17) zu dem ersten oder dem zweiten Positionierungsstreifen (26, 24) zu leiten, wenigstens in Abhängigkeit davon, ob auf dem ersten Positionierungsstreifen (26) andere Fahrzeuge stehen oder nicht, und, wenn der zweite Positionierungsstreifen (24) ausgewählt wird, dass es einen Befehl zum Umladen des Containers mit dem Stapelkran (12) zwischen dem ankommenden Fahrzeug (17) und dem Hilfsstapel (18) gibt, wobei der Hilfsstapel (18) innerhalb des Hebebereichs des wenigstens einen Kaikrans (10, 11) liegt.

2. Umladestation nach Anspruch 1, wobei der wenigstens eine Kaikran (10, 11) eine Brücke und ein fahrbares Untergestell aufweist, das die Brücke trägt, wobei die Brücke von dem fahrbaren Untergestell oberhalb des Hilfsstapels (18) und des assoziierten Stapelkrans (12) nach außen vorsteht, wobei der Stapelkran (12) über Schienen unterhalb der Brücke parallel zu dem Kai (19) gefahren werden kann.

3. Umladestation nach Anspruch 1 oder 2, die einen weiteren Kaikran (10, 11) mit einem weiteren Hebebereich aufweist, der den ersten Fahrzeug-Positionierungsstreifen (26) und den Hilfsstapel (18) enthält, wobei das Befehlserzeugungssystem so ausgelegt ist, dass es im Falle einer Entscheidung, das ankommende Fahrzeug (16, 17) zu dem ersten Positionierungsstreifen (26) zu leiten, die weitere Entscheidung trifft, das Fahrzeug (16, 17) zu dem Teil des ersten Positionierungsstreifens (26) vor dem Kaikran oder vor dem weiteren Kaikran zu leiten, je nachdem, ob andere Fahrzeuge auf Teilen des ersten Positionierungsstreifens (26) vor dem Kaikran bzw. dem weiteren Kaikran stehen oder nicht.

4. Umladestation nach einem der vorhergehenden Ansprüche, wobei das Befehlserzeugungssystem so ausgelegt ist, dass es, wenn es die Entscheidung trifft, das ankommende Fahrzeug (16, 17) zu dem ersten oder dem zweiten Positionierungsstreifen (26, 24) zu leiten, den ersten Positionierungsstreifen (26) bevorzugt, wenn weniger als eine vorgegebene Anzahl von Fahrzeugen auf dem ersten Positionierungsstreifen (26) stehen.

5. Umladestation nach Anspruch 4, wobei das Befehlserzeugungssystem so ausgelegt ist, dass es, wenn es die Entscheidung trifft, das ankommende Fahrzeug (16, 17) zu dem ersten oder dem zweiten Positionierungsstreifen (26, 24) zu leiten, den ersten Positionierungsstreifen (26) bevorzugt, wenn mehr als eine vorgegebene Anzahl von Fahrzeugen auf dem zweiten Positionierungsstreifen (24) stehen.

6. Umladestation nach einem der vorhergehenden Ansprüche, wobei das Befehlserzeugungssystem so ausgelegt ist, dass es, wenn es die Entscheidung trifft, das ankommende Fahrzeug (16, 17) zu dem ersten oder dem zweiten Positionierungsstreifen (26, 24) zu leiten, denjenigen des ersten und zweiten Positionierungsstreifens (26, 24) auswählt, an dem erwartet werden kann, dass das ankommende Fahrzeug (16, 17) so früh wie möglich ent- oder beladen werden kann, wenn es von dem Stapelkran (12) oder dem wenigstens einen Kaikran (10, 11) nach gegebenenfalls bereits vorhandenen Fahrzeugen ent- oder beladen wird.

7. Umladestation nach einem der vorhergehenden Ansprüche, wobei das Befehlserzeugungssystem so ausgelegt ist, dass es den Grad der Beladung des Schiffs (14) misst und, abhängig von dem Gewicht eines Containers auf dem ankommenden Fahrzeug (16, 17) auswählt, das ankommende Fahrzeug (16, 17) zu dem zweiten Positionierungsstreifen (24) zu leiten, wenn der Container beim Treffen der Entscheidung nicht direkt geladen werden kann.

8. Umladestation nach einem der vorhergehenden Ansprüche, wobei das Befehlserzeugungssystem so ausgelegt ist, dass es Entscheidungen über Befehle für die ankommenden Fahrzeuge (16, 17) in verteilter Art und Weise trifft, wobei wenigstens eine der Entscheidungen unabhängig von nachfolgenden Entscheidungen über das ankommende Fahrzeug (16, 17) getroffen wird und die nachfolgenden Entscheidungen in Abhängigkeit von der Durchführung der wenigstens einen Entscheidung getroffen werden.

9. Verfahren zum Be- und/oder Entladen von Containern (15) auf einem Schiff (14), wobei das Verfahren die folgenden Schritte umfasst:
- Transportieren von Containern mit wenigstens einem Kaikran (10, 11) von und/oder zu einem Schiff (14) entlang des Kais (19), während der wenigstens eine Kaikran (10, 11) einen Hebebereich aufweist, der einen ersten Positionierungsstreifen (26) für ein Fahrzeug (16) auf einer Kaifläche enthält;
- Entscheiden, durch Computer-Befehle, ob ein ankommendes Fahrzeug (16, 17) wenigstens in Abhängigkeit davon, ob auf dem ersten Positionierungsstreifen (26) eine Anzahl anderer Fahrzeuge steht oder nicht, zu dem ersten oder zu einem zweiten Positionierungsstreifen (26, 24) auf der Kaifläche geschickt wird;
- falls das ankommende Fahrzeug (16, 17) zu dem zweiten Positionierungsstreifen (24) geschickt wird, Anfordern eines Stapelkrans (12), der parallel zu dem Kai (19) bewegt werden kann, um einen Container zwischen dem ankommenden Fahrzeug (16, 17) und einem Hilfsstapel (18) umzuladen, wobei der Hilfsstapel (18) ganz oder teilweise innerhalb des Hebebereichs des wenigstens einen Kaikrans (10, 11) auf der Kaifläche liegt.

## Revendications

1. Station de transfert pour charger des conteneurs (15) sur et/ou décharger des conteneurs d'un bateau (14), laquelle station de transfert est prévue avec :
- un quai (19) avec une surface de quai adjacente à celui-ci ;
- au moins un portique maritime (10, 11) pour transporter des conteneurs de et/ou sur un bateau (14) se trouvant le long du quai (19), le au moins un portique maritime (10, 11) ayant une plage de hissage comprenant une première bande de positionnement (26) pour un véhicule (16) sur la surface de quai ;
- un pont gerbeur (12) mobile parallèlement au quai (19) et agencé pour transporter des conteneurs entre une deuxième bande de positionnement (24) pour un véhicule (17) sur la surface de quai et une pile auxiliaire (18) sur la surface de quai ;
**caractérisée en ce que** la station est prévue avec un système de génération d'instruction conçu pour prendre une décision afin de diriger un véhicule arrivant (16, 17) vers la première ou la deuxième bande de positionnement (26, 24), dépendant au moins du fait que d'autres véhicules sont présents ou pas sur la première bande de positionnement (26) et, lorsque la deuxième bande de positionnement (24) est sélectionnée, pour donner une instruction concernant le transfert du conteneur avec le pont gerbeur (12) entre le véhicule arrivant (17) et la pile auxiliaire (18), moyennant quoi la pile auxiliaire (18) se trouve dans la plage de hissage du au moins un portique maritime.

2. Station de transfert selon la revendication 1, dans laquelle le au moins un portique maritime (10, 11) est prévu avec un pont et des châssis de roulement menants qui supportent le pont, le pont faisant saillie à l'extérieur des châssis de roulement menants au dessus de la pile auxiliaire (18) et du pont gerbeur (12) associé, le pont gerbeur (12) pouvant être entraîné sur des rails au dessous du pont parallèle au quai (19).

3. Station de transfert selon la revendication 1 ou 2, prévue avec un portique maritime (10, 11) supplémentaire avec une plage de hissage supplémentaire comprenant la première bande de positionnement de véhicule (26) et la pile auxiliaire (18), le système de génération d'instruction étant agencé, dans le cas d'une décision pour diriger le véhicule arrivant (16, 17) vers la première bande de positionnement (26), pour prendre une autre décision, en fonction du fait que d'autres véhicules sont présents ou pas sur des parties de la première bande de positionnement (26) en face du portique maritime et du portique maritime supplémentaire, respectivement, pour diriger le véhicule (16, 17) vers la partie de la première bande de positionnement (26) en face du portique maritime ou en face du portique maritime supplémentaire.

4. Station de transfert selon l'une quelconque des revendications précédentes, dans laquelle on agence le système de génération d'instruction, lorsque l'on décide de diriger le véhicule arrivant (16, 17) vers la première ou la deuxième bande de positionnement (26, 24), pour donner la préférence à la première bande de positionnement (26), lorsqu'il y a moins qu'un nombre prédéterminé de véhicules sur la première bande de positionnement (26).

5. Station de transfert selon la revendication 4, dans laquelle on agence le système de génération d'instruction, lorsque l'on décide de diriger le véhicule arrivant (16, 17) vers la première ou la deuxième bande de positionnement (26, 24), pour donner la préférence à la première bande de positionnement (26), lorsqu'il y a plus qu'un nombre prédéterminé de véhicules sur la deuxième bande de positionnement (24).

6. Station de transfert selon l'une quelconque des revendications précédentes, dans laquelle on agence le système de génération d'instruction, lorsque l'on décide de diriger le véhicule avant (16, 17) vers la première ou la deuxième bande de positionnement (26, 24), afin de choisir une bande parmi les première et deuxième bandes de positionnement (26, 24), où l'on peut s'attendre à ce que le véhicule arrivant (16, 17) soit déchargé ou chargé aussitôt que possible, lorsqu'il est déchargé ou chargé par le pont gerbeur (12) ou le au moins un portique maritime (10, 11) après les véhicules éventuellement déjà présents.

7. Station de transfert selon l'une quelconque des revendications précédentes, dans laquelle on agence le système de génération d'instruction pour mesurer un degré de chargement du bateau (14) et, selon le poids d'un conteneur sur le véhicule arrivant (16, 17), si le conteneur ne peut pas être chargé directement, lors de la décision, pour choisir de diriger le véhicule arrivant (16, 17) vers la deuxième bande de positionnement (24).

8. Station de transfert selon l'une quelconque des revendications précédentes, dans laquelle on agence le système de génération d'instruction pour prendre des décisions concernant les instructions du véhicule arrivant (16, 17) d'une manière répartie, avec au moins l'une des décisions qui est prise indépendamment des décisions suivantes concernant le véhicule arrivant (16, 17) et les décisions suivantes qui sont prises en fonction d'une exécution de la au moins une décision.

9. Procédé permettant de charger et/ou de décharger des conteneurs (15) sur un bateau (14), lequel procédé comprend les étapes consistant à :
- transporter des conteneurs avec au moins un portique maritime (10, 11) de et/ou dans un bateau (14) le long du quai (19) alors que le au moins un portique maritime (10, 11) a une plage de hissage comprenant une première bande de positionnement (26) pour un véhicule (16) sur une surface de quai ;
- décider, à l'aide d'instructions informatisées, d'envoyer un véhicule arrivant (16, 17) selon au moins le fait de savoir si un certain nombre d'autres véhicules sont présents ou pas sur la première bande de positionnement (26), vers la première ou vers une deuxième bande de positionnement (26, 24) sur la surface de quai ;
- dans le cas où le véhicule arrivant (16, 17) est envoyé vers la deuxième bande de positionnement (24), commander à un pont gerbeur (12) mobile parallèlement au quai (19) de transférer un conteneur entre le véhicule arrivant (16, 17) et une pile auxiliaire (18), laquelle pile auxiliaire (18) est complètement ou partiellement dans la plage de hissage du au moins un portique maritime (10, 11) sur la surface de quai.
